# EUROPEAN PATENT APPLICATION

(11) **EP 1 725 008 A1**
(43) Date of publication of application: **22.11.2006**
(21) Application number: 05720121.2
(22) Date of filing: 07.03.2005
(51) Int. Cl.: H04M 15/00, H04Q 7/38

(54) **COMMUNICATION CHARGE SYSTEM, ULTRA-SMALL RADIO BASE STATION, COMMUNICATION CHARGE METHOD, AND PROGRAM**

(30) Priority: 12.03.2004 JP 2004071245
(71) Applicant: NEC CORPORATION, Minato-ku, Tokyo 108-8001 (JP)
(72) Inventor: KOIZUMI, Yoshihisa, c/o NEC Corporation, Tokyo 1088001 (JP)
(74) Representative: Glawe, Delfs, Moll
(86) International application number: PCT/JP2005/003849
(87) International publication number: WO 2005/088953

(57) **Abstract**

When, for example, wireless communication is performed by a wireless communication terminal from a specific location such as user's home, by the user him/herself making registration in advance in a very small wireless base station set up at that location, a low-rate charging calculation method can be applied and thus the low-rate charging calculation method can be more freely used. When a Home-BTS 2 receives a phone number sent from a mobile phone 1, the Home-BTS 2 checks whether the mobile phone 1 connected to the Home-BTS 2 has a phone number which is registered in advance in the Home-BTS 2 as an application target phone number 23a. As a result of the check, if the phone number of the mobile phone 1 matches the phone number registered in advance as the application target phone number 23a, the Home-BTS 2 adds an identification header to a signal from the mobile phone 1 and sends the signal to a base station control apparatus 4.

## Description

### TECHNICAL FIELD

The present invention relates to a communication fee charging system, a very small wireless base station, a communication fee charging method, and a program for charging a communication fee for communication using a wireless communication terminal by a user.

### BACKGROUND ART

In a conventional communication fee charging system such as a mobile phone charge system, a communication fee is determined in advance by a contract and generally, though a basic fee or the like may be incurred, the fee increases in proportion to the amount of use.

For a charging system, in the one described in patent document 1, a base station nearby user's home is registered as a specific base station at a management center that is provided for each network of a communication common carrier and that performs authentication of communication, connection management, a charging process, etc., whereby calls made from a caller side terminal apparatus through the base station can be charged at a discount rate.
Patent document 1: Japanese Patent Application Laid-Open No. 2003-299154

### DISCLOSURE OF THE INVENTION

### PROBLEMS TO BE SOLVED BY THE INVENTION

However, in the aforementioned conventional communication fee charging system, charges are made according to the amount of use such as the amount of communicated information, and thus, regardless of whether the user uses the phone at home, or the user is out and is moving, the communication fee is the same. For example, there is a problem that the user feels that the rates for calls made at a predetermined location such as home are relatively high compared with those for a fixed phone. Particularly, there is a problem for a user who frequently uses a portable wireless communication terminal at home instead of a fixed phone that payment of high charges becomes a great burden.

Along with recent spread of mobile communications, the number of subscribers who use mobile phones instead of fixed phones has increased. On the other hand, communication fees for mobile phones are still high compared with calls made from fixed phones. Even when a mobile phone is used at a predetermined location such as home or an office, the same rate is charged as when the mobile phone is used outside or in transit, and therefore, a feeling that mobile phones are relatively expensive in use environments where mobile phones compete with fixed phones still remains, stemming spread of mobile phones.

The one described in the aforementioned patent document 1 requires registration at a management server of a communication common carrier in order to apply for a discount rate. Thus, for example, to register a base station nearby user's home as a specific base station, there is a need to perform procedures that the communication common carrier checks which one is a base station to be registered and thereupon the user applies to the communication common carrier for registration procedures.
Accordingly, for example, even if there is a base station very close to where communication is performed away from home, it is virtually impossible to make a temporary registration such that a low-rate charging calculation method is applied to the communication from that location.

The present invention is made in view of such circumstances and an object of the present invention is therefore to provide a communication fee charging system, a very small wireless base station, a communication fee charging method, and a program, in which when, for example, wireless communication by a wireless communication terminal is performed from a specific location such as user's home, by the user him/herself making registration in advance at a very small wireless base station set up at that location, a low-rate charging calculation method can be applied and thus the low-rate charging calculation method can be more freely used.

### MEANS TO SOLVE THE PROBLEMS

In order to attain such an object, a communication fee charging system according to a first aspect of the present invention includes: portable wireless communication terminals that perform wireless communication by transmitting identification information to identify terminals; charging means for charging a communication fee to each portable wireless communication terminal based on the identification information; determination means for informing the charging means to apply the low-rate charging calculation method to the portable wireless communication terminal when wireless communication with a portable wireless communication terminal is received and identification information on the portable wireless communication terminal is registered in advance as an application target for a low-rate charging calculation method; and registration means having an operation unit and a display unit which allow a user to register arbitrary identification information in the determination means as an application target for the low-rate charging calculation method.
In this way, the user him/herself can register arbitrary identification information in the determination means as an application target for the low-rate charging calculation method. Also, when communication is established away from home, for example, the low-rate charging calculation method can be more freely used.

It is preferable that the determination means include a very small wireless base station and a base station control apparatus which is a higher-level apparatus for the very small wireless base station, the registration means register the identification information in the very small wireless base station, and the very small wireless base station include a storage unit that stores registered identification information.

It is preferable that when outgoing transmission from a portable wireless communication terminal is received, the very small wireless base station determine whether identification information on the portable wireless communication terminal is registered in advance as an application target for the low-rate charging calculation method, and if the identification information on the portable wireless communication terminal is registered in advance as an application target for the low-rate charging calculation method, the very small wireless base station perform a process for applying the low-rate charging calculation method to the portable wireless communication terminal.

It is preferable that when the aforementioned very small wireless base station receives outgoing transmission from a portable wireless communication terminal and applies the low-rate charging calculation method to the portable wireless communication terminal, the very small wireless base station add an identification header to information transmitted from the portable wireless communication terminal and send the information to the base station control apparatus, the identification header allowing identification that identification information on the portable wireless communication terminal is registered in advance as an application target for the low-rate charging calculation method.

It is preferable that when the base station control apparatus receives incoming transmission to a portable wireless communication terminal, the base station control apparatus determine based on information from the very small wireless base station whether the portable wireless communication terminal is registered in advance as an application target for the low-rate charging calculation method, and if identification information on the portable wireless communication terminal is registered in advance as an application target for the low-rate charging calculation method, the base station control apparatus perform a process for applying the low-rate charging calculation method to the portable wireless communication terminal.

A very small wireless base station according to a second aspect of the present invention is one used in a system including portable wireless communication terminals that perform wireless communication by transmitting identification information to identify terminals and charging means for charging a communication fee to each portable wireless communication terminal based on the identification information, the very small wireless base station including: a storage unit that stores identification information on a portable wireless communication terminal which is an application target for a low-rate charging calculation method; and a control unit that performs, when outgoing transmission from a portable wireless communication terminal is received and identification information on the portable wireless communication terminal is registered in advance in the storage unit as an application target for the low-rate charging calculation method, a process for applying the low-rate charging calculation method to the portable wireless communication terminal.
By this, arbitrary identification information can be registered inside a very small wireless base station as an application target for the low-rate charging calculation method. Also, communication is established away from home, for example, by the user him/herself making registration inside the very small wireless base station, the low-rate charging calculation method can be more freely used.

It is preferable that registration of identification information in the storage unit as an application target for the low-rate charging calculation method be received from registration means having a display unit and an operation unit which allow a user to register the identification information.

A communication fee charging method according to a third aspect of the present invention is one for a system including portable wireless communication terminals that perform wireless communication by transmitting identification information to identify terminals and charging means for charging a communication fee to each portable wireless communication terminal based on the identification information, the method including: a registration step of registering arbitrary identification information inside a very small wireless base station as an application target for a low-rate charging calculation method; and a determination step of allowing the charging means to apply the low-rate charging calculation method to the portable wireless communication terminal when wireless communication is established by a portable wireless communication terminal and identification information on the portable wireless communication terminal is registered in advance in the registration step.
By this, arbitrary identification information can be registered inside a very small wireless base station as an application target for the low-rate charging calculation method. Also, when communication is established away from home, for example, by the user him/herself making registration inside the very small wireless base station, the low-rate charging calculation method can be more freely used.

It is preferable that in the registration step, registration be made by registration means having a display unit and an operation unit which allow a user to register identification information which is an application target for the low-rate charging calculation method.

It is preferable that in the aforementioned determination step, when outgoing transmission from a portable wireless communication terminal is received and identification information on the portable wireless communication terminal is registered in advance as an application target for the low-rate charging calculation method, an identification header be added to information transmitted from the portable wireless communication terminal, the identification header indicating that the identification information on the portable wireless communication terminal is registered in advance as an application target for the low-rate charging calculation method.

It is preferable that in the determination step, when incoming transmission to a portable wireless communication terminal is received and identification information on the portable wireless communication terminal is registered in advance as an application target for the low-rate charging calculation method, a process for applying the low-rate charging calculation method to the portable wireless communication terminal be performed.

A communication fee charging program according to a fourth aspect of the present invention is one for a system including portable wireless communication terminals that perform wireless communication by transmitting identification information to identify terminals and charging means for charging a communication fee to each portable wireless communication terminal based on the identification information, the program causing a computer to execute: a registration process of registering arbitrary identification information inside a very small wireless base station as an application target for a low-rate charging calculation method; and a determination process of allowing the charging means to apply the low-rate charging calculation method to the portable wireless communication terminal, when wireless communication is performed by a portable wireless communication terminal and identification information on the portable wireless communication terminal is registered in advance in the registration process.
By this, arbitrary identification information can be registered inside a very small wireless base station as an application target for the low-rate charging calculation method. Also, when communication is established away from home, for example, by the user him/herself making registration inside the very small wireless base station, the low-rate charging calculation method can be more freely used.

It is preferable that in the aforementioned registration process, registration be received from registration means having a display unit and an operation unit which allow a user to register identification information which is an application target for the low-rate charging calculation method.

It is preferable that in the aforementioned determination process, when outgoing transmission from a portable wireless communication terminal is received and identification information on the portable wireless communication terminal is registered in advance as an application target for the low-rate charging calculation method, an identification header be added to information transmitted from the portable wireless communication terminal, the identification header allowing identification that the identification information on the portable wireless communication terminal is registered in advance as an application target for the low-rate charging calculation method.

It is preferable that in the aforementioned determination process, when incoming transmission to a portable wireless communication terminal is received and identification information on the portable wireless communication terminal is registered in advance as an application target for the low-rate charging calculation method, a process for applying the low-rate charging calculation method to the portable wireless communication terminal be performed.

### EFFECT OF THE INVENTION

As described above, according to the present invention, when, for example, wireless communication by a wireless communication terminal is performed from a specific location such as user's home, a user him/herself makes registration in advance at a very small wireless base station set up at that location and a low-rate charging calculation method can be applied, and thus the low-rate charging calculation method can be more freely used.

### BEST MODE FOR CARRYING OUT THE INVENTION

Now, an embodiment in which a communication fee charging system according to the present invention is applied to a mobile phone system will be described in detail using the drawings.
In a mobile phone system according to a preferred embodiment, only when a mobile phone is registered in advance at a Home-BTS (Base Transceiver Station) and establishes a connection through the Home-BTS and makes a call, a low-rate calculation method is applied to a charge for the call made by the mobile phone and otherwise a standard charging calculating method is applied.

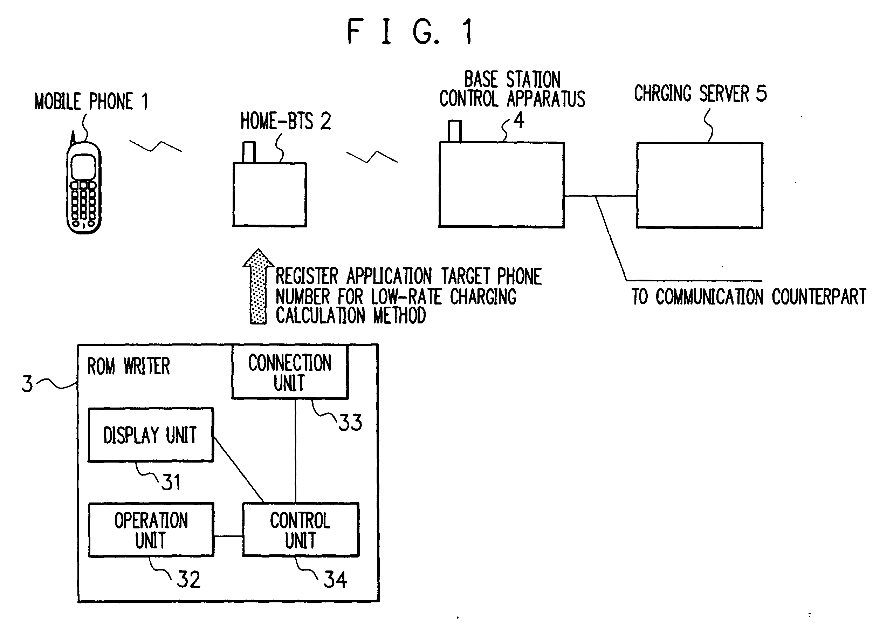

The mobile phone system according to the present embodiment is, as shown in FIG. 1, composed of mobile phones 1, a Home-BTS 2, a ROM writer (registration means) 3 for writing into the Home-BTS 2, a base station control apparatus 4 which is present at a higher level than the Home-BTS 2, and a charging server 5. Wireless communication is performed between the mobile phones 1 and the Home-BTS 2 and between the Home-BTS 2 and the base station control apparatus 4.

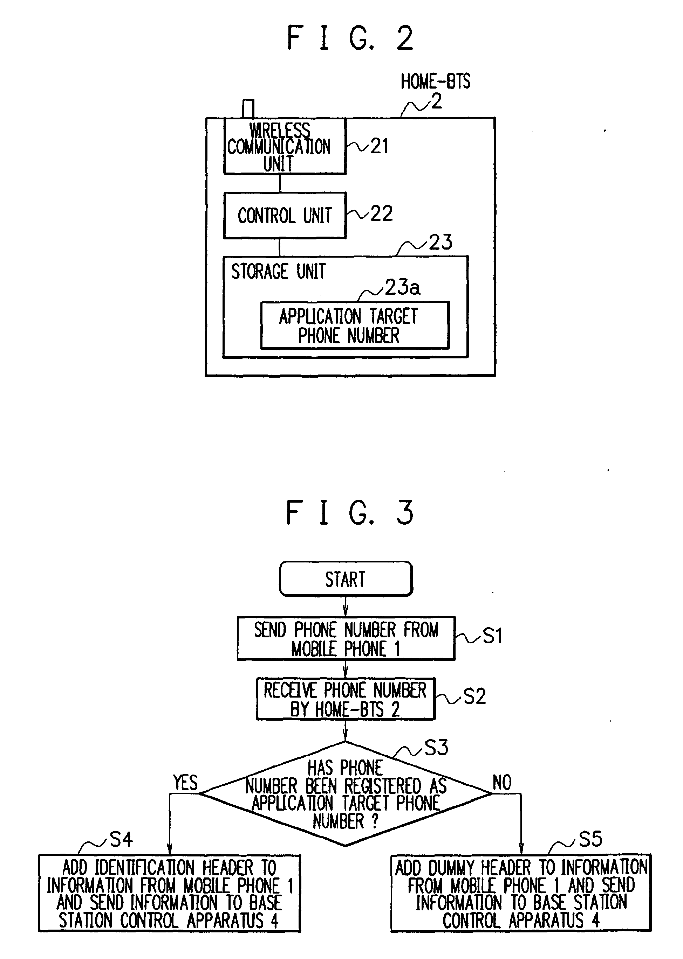

The Home-BTS 2 is a very small wireless base station designed in such a very small manner that a user who uses a mobile phone 1 can set it up in his/her house without problems. The Home-BTS 2 receives a line connection request from a mobile phone 1 and relays the connection.
As shown in FIG. 2, the Home-BTS 2 includes a wireless communication unit 21, a control unit 22 that controls the entire apparatus, and a storage unit 23. In the storage unit 23, a phone number of a mobile phone 1 which is a target of the low-rate charging calculation method is stored as an application target phone number 23a (identification information which is an application target of the low-rate charging calculation method).

The Home-BTS 2 has the following function. When the Home-BTS 2 receives a line connection request from a mobile phone 1, if the transmission source of the request is an application target mobile phone 1 to which the low-rate charging calculation method is applied, the Home-BTS 2 adds to data transmitted from the mobile phone 1 an identification header containing identification information which is used to identify that the request is transmitted from the mobile phone 1, the mobile phone 1 being registered as the application target phone number 23a, and sends the data to the higher-level base station control apparatus 4.

The ROM writer 3 includes, as shown in FIG. 1, a display unit 31 such as a liquid crystal screen, an operation unit 32 such as input keys, a connection unit 33 for performing communication with the Home-BTS 2, and a control unit 34 that controls the entire apparatus. The ROM writer 3 is configured to allow the user to make registration at the Home-BTS 2.
When the user registers at the Home-BTS 2 an application target phone number to which the low-rate charging calculation method is applied, the user connects the connection unit 33 to the Home-BTS 2 by using the ROM writer 3 and inputs the phone number with the operation unit 32 while referring to display of the display unit 31, thereby making registration at the Home-BTS 2.

The base station control apparatus 4 is an apparatus composing a wireless base station for performing communication by the mobile phones 1. The base station control apparatus 4 performs a process of informing the charging server 5 of a charging calculation method to be applied to a user in communication, based on information obtained from a header of a received signal.
Specifically, when the aforementioned identification header is contained in a header of a received signal, the base station control apparatus 4 sends to the charging server 5 information indicating to apply a low-rate charging calculation method, and when the aforementioned identification header is not contained in a header of a received signal, the base station control apparatus 4 sends to the charging server 5 information indicating to apply a standard discharging calculation method.

The charging server 5 performs a charging calculation on a phone number of each mobile phone 1 based on a call duration and the amount of packets from the respective phone numbers and performs communication fee charging and billing processes on the respective users of the phone numbers.

Now, the operation of the mobile phone system according to the present embodiment will be described.
First, the operation performed when the Home-BTS 2 receives outgoing transmission from a mobile phone 1 will be described with reference to FIG. 3.
FIG. 3 is a flowchart showing the flow of a process in which based on a phone number of a mobile phone 1, the Home-BTS 2 determines a charging calculation method to be applied to the outgoing transmission from the mobile phone 1 and sends a determination result to the higher-level base station control apparatus 4.

The process shown in FIG. 3 is composed of a process (step S1) of sending, by a terminal (mobile phone 1), terminal identification information (phone number); a process (step S2) of receiving, by the Home-BTS 2, a signal from the terminal; a process (step S3) of determining whether the terminal identification information in the received signal was registered in advance; a process (step S4) of adding, if the terminal identification information has been registered, an identification header to the signal and sending the signal to the base station control apparatus 4; and a process (step S5) of adding, if the terminal identification information was not registered, a dummy header to the signal and sending the signal to the base station control apparatus 4.

It is assumed that before establishing communication by a mobile phone 1, the user has registered in advance a phone number of the mobile phone 1 in the Home-BTS 2 by the ROM writer 3 as an application target phone number 23a.
When the user establishes communication, before establishing communication with the Home-BTS 2, a mobile phone 1 sends a phone number to the Home-BTS 2 (step S1). This process is performed also in an existing system and thus is generally considered to be performed in a step of registering the location of the mobile phone 1.
Then, the Home-BTS 2 receives the phone number sent, at the aforementioned step S1, from the mobile phone 1 (step S2) and checks whether the mobile phone 1 being connected to the Home-BTS 2 has a phone number which was registered in advance in the Home-BTS 2 as the application target phone number 23a (step S3).

If, as a result of the check, the phone number of the mobile phone 1 matches the phone number registered in advance as the application target phone number 23a, the Home-BTS 2 adds an identification header to a signal from the mobile phone 1 and sends the signal to the base station control apparatus 4 (step S4). The identification header is to be added to indicate that the mobile phone 1, which is a communication source, belongs to a user who is registered in advance in the Home-BTS 2.

On the other hand, if, as a result of the check at the aforementioned step S3, the phone number of the mobile phone 1 is not that of the user registered in advance in the application target phone number 23a, the Home-BTS 2 adds a dummy header to a signal from the mobile phone 1 and sends the signal to the base station control apparatus 4 (step S5). The dummy header is a replacement for the identification header added at the aforementioned step S4 and is useful to routinely perform processes in the higher-level base station control apparatus 4.

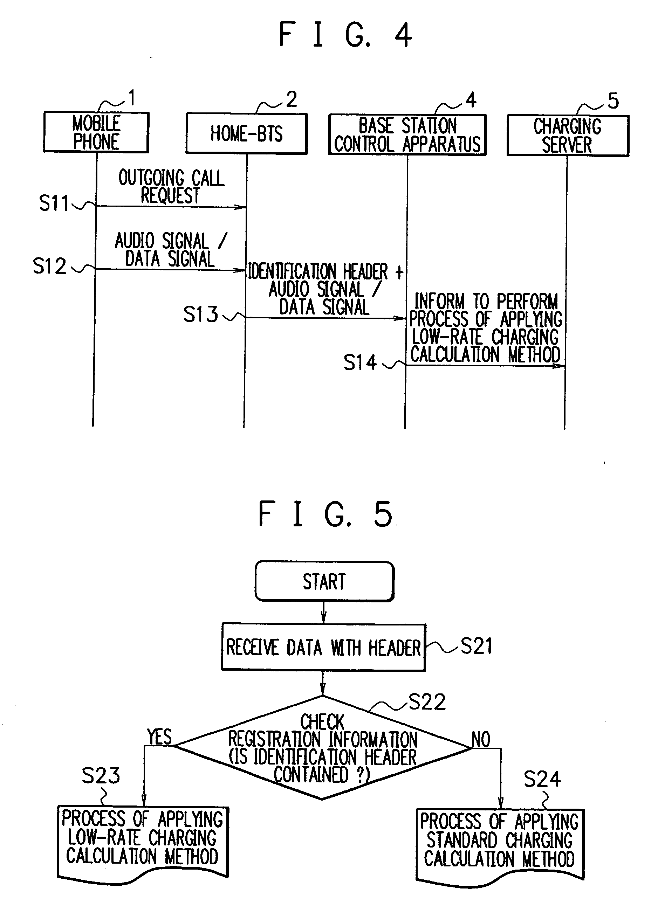

Now, an overview of the flow of data in the mobile phone system according to the present embodiment will be described with reference to FIG. 4.
FIG. 4 is a sequence chart showing a simplified flow of a signal through a mobile phone 1, the Home-BTS 2, and the base station control apparatus 4 when the mobile phone 1 makes an outgoing call based on the flowchart of FIG. 3.

The process shown in FIG. 4 includes a process of issuing outgoing call request (step S11) from an from a terminal (mobile phone 1); a process of receiving, by the Home-BTS, an audio signal/data signal (step S12); a process of adding an identification header to the received audio signal/data signal and sending the signal to the base station control apparatus 4 (step S13); and a process of selecting, by the base station control apparatus 4, a charging calculation method based on whether an identification header is contained and informing the charging server 5 of the selected method (step S14).

It is assumed that upon performing communication by a mobile phone 1 the user has registered in advance a phone number of the mobile phone 1 in the Home-BTS 2 by the ROM writer 3 as an application target phone number 23a.
When the user performs communication, first, prior to start of communication, a mobile phone 1 sends an outgoing call request to the Home-BTS 2 (step S11). When the request is received, the mobile phone 1 continuously sends to the Home-BTS 2 an audio signal or a data signal which is communication information (step S12).

The Home-BTS 2 adds, as described above at step S4 or S5 of FIG. 3, an identification header or a dummy header to the signal from the mobile phone 1 and sends the signal to the base station control apparatus 4 (step S13).
The base station control apparatus 4 performs a process of informing that if the identification header is added to the signal received from the Home-BTS 2, the low-rate charging calculation method is applied to a charging calculation for communication from the mobile phone 1 which is performed by the charging server 5, and that if the dummy header is added, the standard charging calculation method is applied to a charging calculation for communication from the mobile phone 1 which is performed by the charging server 5 (step S14).

Now, a process of selecting a charging calculation method by the base station control apparatus 4 will be described with reference to FIG. 5.
FIG. 5 is a flowchart showing a detailed process of applying a charging calculation method at step S14 of FIG. 4.

The process shown in FIG. 5 includes reception, by the base station control apparatus 4, of a signal including a header (step S21); a process of decoding registered information (step S22); a process of applying the low-rate charging calculation method if, as a result of decoding the registered information, it is the one registered in advance (step S23); and a process of applying the standard charging calculation method if it is not the one registered (step S24).

First, the base station control apparatus 4 receives data with a header from the Home-BTS 2 (step S21) and checks header information contained in the data (step S22). If it is determined based on the header information that a mobile phone 1 which is the source of outgoing transmission is of the user whose phone number is registered in advance in the Home-BTS 2 (step S22; Yes), the base station control apparatus 4 sends to the charging server 5 information instructing to apply the low-rate charging calculation method (step S23).
On the other hand, if it is determined based on the header information that the mobile phone 1 which is the source of outgoing transmission is not of the user whose phone number is registered in advance in the Home-BTS 2 (step S22; No), the base station control apparatus 4 sends to the charging server 5 information instructing to apply the standard charging calculation method (step S24).

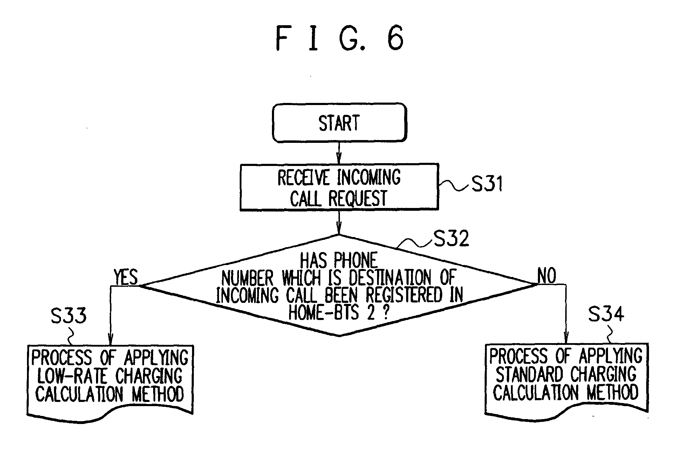

Now, the operation performed when an outgoing call arrives at a mobile phone 1 with a phone number which is registered in advance in the Home-BTS 2 will be described with reference to FIG. 6.
FIG. 6 is a flowchart showing a process performed by the base station control apparatus 4 when an incoming call arrives at a mobile phone 1 present in a cell region of the Home-BTS 2.

The process shown in FIG. 6 includes reception of a reception (incoming call) request (step S31); a process of determining, by the base station control apparatus 4, whether a mobile phone 1 which is the destination of an incoming call is in the cell region of the Home-BTS 2 and is of the user whose phone number has been registered in advance (step S32); a process of applying the low-rate charging calculation method if, as a result of the determination, the mobile phone 1 is in the cell region of the Home-BTS 2 and has a phone number having been registered in advance (step S33); and a process of applying the standard charging calculation method if, even when the mobile phone 1 is present outside of the cell region of Home-BTS 2 or in the cell region, the mobile phone 1 is not of the user whose phone number has been registered in advance (step S34).

It is assumed that upon performing communication by a mobile phone 1 the user has registered in advance a phone number of the mobile phone 1 in the Home-BTS 2 by the ROM writer 3 as an application target phone number 23a.
First, when a request for an incoming call to an arbitrary mobile phone 1 is received (step S31), the base station control apparatus 4 checks whether a phone number of the mobile phone 1 at which an incoming call arrives is registered in advance in the Home-BTS 2 as an application target phone number 23a (step S32). Generally, the location of a mobile phone 1 which can receive an incoming call is supposed to be registered in the base station control apparatus 4 through at lest one base station (including the Home-BTS 2) within the system, and thus, the base station control apparatus 4 can perform identification.

If the phone number of the mobile phone 1 which is the destination of the incoming call is registered in the Home-BTS (step S32; Yes), the base station control apparatus 4 sends to the charging server 5 information instructing to apply the low-rate charging calculation method (step S33). If the phone number of the mobile phone 1 which is the destination of the incoming call is not registered in the Home-BTS (step S32; No), the base station control apparatus 4 sends to the charging server 5 information instructing to apply the standard charging calculation method (step S34).

As described above, by the mobile phone system according to the present embodiment, an advantageous effect can be obtained that regardless of an outgoing call or an incoming call, when communication is performed through the Home-BTS 2, the low-rate charging calculation method can be applied to a charging calculation of a communication fee which is performed on a user of a phone number which is registered in advance in the Home-BTS 2.
Therefore, for example, when a user is away from home and there is a Home-BTS 2 nearby the user, the user temporarily registers a phone number of a mobile phone 1 at the Home-BTS 2 and then the low-rate charging calculation method is applied to communication from that location. Thus the low-rate charging calculation method can be more freely used.

The mobile phone system according to the present embodiment is suitably applied to, for example, a local communication system inside buildings or in a closed space. The mobile phone system may be used in a manner where when the user attempts outgoing transmission from a mobile phone 1 at a location where a Home-BTS 2 is set up, the user registers a phone number in the Home-BTS 2 by the ROM writer 3 and then makes an outgoing call, whereby the user can make a call to which the low-rate charging calculation method is applied.

Note that each embodiment described above is a preferred embodiment of the present invention and thus various changes can be made in the embodiment without departing from the scope of the invention.
For example, the ROM writer 3 is not limited to that having the aforementioned configuration as long as it has a function of registering a phone number in the storage unit 23 of the Home-BTS 2; for example, one operated from a host PC or one operated by other controllers may be used.

Although the aforementioned embodiment describes that the ROM writer 3 is used to register an application target phone number in the Home-BTS 2, the scheme is not limited thereto as long as it allows rewriting the content registered in the storage unit 23 of the Home-BTS 2. For example, the configuration may be such that a main body of the Home-BTS 2 has a display unit and an input unit and by means of the display unit and the input unit the user makes registration.
That is, as long as a communication fee charging system to which the present invention is applied includes registration means which allows the user to rewrite (register) the content registered in the storage unit 23 of the Home-BTS 2 as an application target phone number 23a and the registration means has an operation unit and a display unit which allow the user to make registration, its aspect is not limited. For example, the ROM writer 3, etc., may be an apparatus provided outside the Home-BTS 2 or may be built in the Home-BTS 2.

Although in the configuration described above using FIG. 1 it is described that wireless communication is performed between the Home-BTS 2 and the base station control apparatus 4, wire communication may be performed.
The storage destination of the application target phone number 23a is not limited to a storage medium (storage unit 23) built in the Home-BTS 2 and may be, for example, one provided outside the apparatus such as a removable-type storage medium.

The aforementioned embodiment describes that the low-rate charging calculation method is applied only to a phone number registered in advance and only when a mobile phone 1 registered in advance in a Home-BTS 2 establishes a connection through the Home-BTS 2 and makes a call. However, by assigning priorities to connections requested from registered phone numbers, the low-rate charging calculation method may be applied to a call passing through the Home-BTS 2 even if the call is made from a mobile phone whose phone number is other than those registered in advance.

That is, the Home-BTS 2 may apply the low-rate charging calculation method to a connection passing therethrough even if a call is made from a mobile phone whose phone number is other than those registered in advance, only when there is no call from a mobile phone whose phone number is registered in advance. If a call occurs from a mobile phone whose phone number is registered in advance, the low-rate charging calculation method is applied to the call from that phone number on a priority basis.
When calls from a plurality of mobile phones 1 can be relayed at a time, only when the number of calls from mobile phones whose phone numbers are registered in advance does not reach the number of mobile phones that can be relayed at a time, the low-rate charging calculation method may be applied even to a call from a mobile phone whose phone number is other than those registered in advance, and connection priorities may be set for applying the low-rate charging calculation method to calls from mobile phones whose phone numbers are registered in advance.

Although the communication fee charging system according to the present invention is described above with reference to the embodiments in which the system is applied to a mobile phone system that charges a communication fee to a mobile phone, the application target is not limited thereto as long as it is a usage-based charging scheme that specifies a communication counterpart; for example, the present invention can be similarly applied to PHS telephone communications, usage-based dial-up data communications, and the like.
In this case, a portable wireless communication terminal is used in place of a mobile phone of the aforementioned embodiment and thus terminal identification information may be used in place of a phone number of the aforementioned embodiment.

By storing processing steps for realizing the communication fee charging system according to the aforementioned embodiment in a storage medium as a program, each of the aforementioned functions according to the embodiment of the present invention can be realized by the program supplied from the storage medium causing a CPU of a computer that composes a system to execute the processes.
In this case, even when a group of information including the program is supplied to an output apparatus from the aforementioned storage medium or from an external storage medium through a network, the present invention can be applied.
That is, a program code itself read from a storage medium realizes novel functionality of the present invention and a storage medium having stored therein the program code and a signal read from the storage medium constitute the present invention.
For the storage medium, for example, a floppy (registered trademark) disk, a hard disk, an optical disk, a magneto-optical disk, a CD-ROM, a CD-R, a magnetic tape, a nonvolatile memory card, a ROM, an EEPROM, or the like may be used.

By the program according to the present invention, it is possible to allow a computer which is controlled by the program to realize each function in the communication fee charging system according to the embodiment of the present invention.

### BRIEF DESCRIPTION OF THE DRAWINGS

FIG. 1 is a block diagram showing an overview of a configuration of a mobile phone system according to an embodiment of the present invention.
FIG. 2 is a block diagram showing an overview of a configuration of a Home-BTS 2.
FIG. 3 is a flowchart showing an operation performed when the Home-BTS 2 receives outgoing transmission from a mobile phone 1.
FIG. 4 is a sequence chart showing an overview of the flow of data in the mobile phone system according to the present embodiment.
FIG. 5 is a flowchart showing a process of selecting a charging calculation method which is performed by a base station control apparatus 4.
FIG. 6 is a flowchart showing a process which is performed by the base station control apparatus 4 when an incoming call arrives at the mobile phone 1.

### DESCRIPTION OF REFERENCE NUMERALS

- 1:: Mobile phone (portable wireless communication terminal)
- 2:: Home-BTS (very small wireless base station)
- 21:: Wireless communication unit
- 22:: Control unit
- 23:: Storage unit
- 23a:: Application target phone number (identification information which is an application target for a low-rate charging calculation method)
- 3:: ROM writer (registration means)
- 31:: Display unit
- 32:: Operation unit
- 33:: Connection unit
- 34:: Control unit
- 4:: Base station control apparatus
- 5:: Charging server (charging means)

## Claims

1. A communication fee charging system comprising:
portable wireless communication terminals that perform wireless communication by transmitting identification information to identify terminals;
charging means for charging a communication fee to each portable wireless communication terminal based on the identification information;
determination means for informing the charging means to apply the low-rate charging calculation method to the portable wireless communication terminal, when wireless communication with a portable wireless communication terminal is established and identification information on the portable wireless communication terminal is registered in advance as an application target for a low-rate charging calculation method; and
registration means having an operation unit and a display unit which allow a user to register arbitrary identification information in the determination means as an application target for the low-rate charging calculation method.

2. The communication fee charging system according to claim 1, wherein
the determination means includes a very small wireless base station and a base station control apparatus which is a higher-level apparatus for the very small wireless base station,
the registration means registers the identification information in the very small wireless base station, and
the very small wireless base station includes a storage unit that stores registered identification information.

3. The communication fee charging system according to claim 2, wherein when outgoing transmission from a portable wireless communication terminal is received, the very small wireless base station determines whether identification information on the portable wireless communication terminal is registered in advance as an application target for the low-rate charging calculation method, and if the identification information on the portable wireless communication terminal is registered in advance as an application target for the low-rate charging calculation method, the very small wireless base station performs a process for applying the low-rate charging calculation method to the portable wireless communication terminal.

4. The communication fee charging system according to claim 3, wherein when the very small wireless base station receives outgoing transmission from a portable wireless communication terminal and applies the low-rate charging calculation method to the portable wireless communication terminal, the very small wireless base station adds an identification header to information transmitted from the portable wireless communication terminal and sends the information to the base station control apparatus, the identification header indicating that identification information on the portable wireless communication terminal is registered in advance as an application target for the low-rate charging calculation method.

5. The communication fee charging system according to any one of claims 2 to 4, wherein when the base station control apparatus receives incoming transmission to a portable wireless communication terminal, the base station control apparatus determines based on information from the very small wireless base station whether the portable wireless communication terminal is registered in advance as an application target for the low-rate charging calculation method, and if identification information on the portable wireless communication terminal is registered in advance as an application target for the low-rate charging calculation method, the base station control apparatus performs a process for applying the low-rate charging calculation method to the portable wireless communication terminal.

6. A very small wireless base station used in a system including portable wireless communication terminals that perform wireless communication by transmitting identification information to identify terminals and charging means for charging a communication fee to each portable wireless communication terminal based on the identification information, the very small wireless base station comprising:
a storage unit that stores identification information on a portable wireless communication terminal which is an application target for a low-rate charging calculation method; and
a control unit that performs a process for applying the low-rate charging calculation method to the portable wireless communication terminal when outgoing transmission from a portable wireless communication terminal is received and identification information on the portable wireless communication terminal is registered in advance in the storage unit as an application target for the low-rate charging calculation method.

7. The very small wireless base station according to claim 6, wherein registration of identification information in the storage unit as an application target for the low-rate charging calculation method is received from registration means having a display unit and an operation unit which allow a user to register the identification information.

8. A communication fee charging method for a system including portable wireless communication terminals that perform wireless communication by transmitting identification information to identify terminals and charging means for charging a communication fee to each portable wireless communication terminal based on the identification information, the method comprising:
a registration step of registering arbitrary identification information inside a very small wireless base station as an application target for a low-rate charging calculation method; and
a determination step of allowing the charging means to apply the low-rate charging calculation method to the portable wireless communication terminal when wireless communication by a portable wireless communication terminal is established and identification information on the portable wireless communication terminal is registered in advance in the registration step.

9. The communication fee charging method according to claim 8, wherein in the registration step, registration is made by registration means having a display unit and an operation unit which allow a user to register identification information which is an application target for the low-rate charging calculation method.

10. The communication fee charging method according to claim 8 or 9, wherein in the determination step, when outgoing transmission from a portable wireless communication terminal is received and identification information on the portable wireless communication terminal is registered in advance as an application target for the low-rate charging calculation method, an identification header is added to information transmitted from the portable wireless communication terminal, the identification header indicating that the identification information on the portable wireless communication terminal is registered in advance as an application target for the low-rate charging calculation method.

11. The communication fee charging method according to any one of claims 8 to 10, wherein in the determination step, when incoming transmission to a portable wireless communication terminal is received and identification information on the portable wireless communication terminal is registered in advance as an application target for the low-rate charging calculation method, a process for applying the low-rate charging calculation method to the portable wireless communication terminal is performed.

12. A communication fee charging program for a system including portable wireless communication terminals that perform wireless communication by transmitting identification information to identify terminals and charging means for charging a communication fee to each portable wireless communication terminal based on the identification information, the program causing a computer to execute the following functions:
a registration process of registering arbitrary identification information inside a very small wireless base station as an application target for a low-rate charging calculation method; and
a determination process of allowing the charging means to apply the low-rate charging calculation method to the portable wireless communication terminal, when wireless communication by a portable wireless communication terminal is established and identification information on the portable wireless communication terminal is registered in advance in the registration process.

13. The communication fee charging program according to claim 12, wherein in the registration process, registration is made by registration means having a display unit and an operation unit which allow a user to register identification information which is an application target for the low-rate charging calculation method.

14. The communication fee charging program according to claim 12 or 13, wherein in the determination process, when outgoing transmission from a portable wireless communication terminal is received and identification information on the portable wireless communication terminal is registered in advance as an application target for the low-rate charging calculation method, an identification header is added to information transmitted from the portable wireless communication terminal, the identification header indicating that the identification information on the portable wireless communication terminal is registered in advance as an application target for the low-rate charging calculation method.

15. The communication fee charging program according to any one of claims 12 to 14, wherein in the determination process, when incoming transmission to a portable wireless communication terminal is received and identification information on the portable wireless communication terminal is registered in advance as an application target for the low-rate charging calculation method, a process for applying the low-rate charging calculation method to the portable wireless communication terminal is performed.
